# EUROPEAN PATENT APPLICATION

(11) **EP 1 862 935 A1**
(43) Date of publication of application: **05.12.2007**
(21) Application number: 06713154.0
(22) Date of filing: 06.02.2006
(51) Int. Cl.: G06F 21/20, G06F 21/22

(54) **NETWORK CONNECTION CONTROL PROGRAM, NETWORK CONNECTION CONTROL METHOD, AND NETWORK CONNECTION CONTROL SYSTEM**

(30) Priority: 03.03.2005 JP 2005059653
(71) Applicant: Intelligent Wave Inc., Tokyo 104-0033 (JP)
(72) Inventor: AOKI, Osamu, Minami, Suginami-ku Tokyo, 1660004 (JP); KAWANO, Hiroaki, 003 (JP)
(74) Representative: Grünecker, Kinkeldey, Stockmair & Schwanhäusser Anwaltssozietät
(86) International application number: PCT/JP2006/302011
(87) International publication number: WO 2006/092931

(57) **Abstract**

To prevent a computer, which is invaded by an unauthorized program such as a virus or spyware when the computer is brought out, from being connected with a secure network such as an intracompany LAN. When a user terminal 10 is started, a connection with the intracompany LAN is tried. Then, a network connection is temporarily stopped and an environment is compared with the one where the user terminal 10 operated previous time. When there is no difference between both of the environments, the connection with the intracompany LAN is restored. However, when it is determined that the user terminal 10 is connected with the network except the intracompany LAN when the user terminal 10 operated previous time, an inspection for a virus or the like is executed by a USB memory 20 where the latest anti-virus software is stored. After it is confirmed that the user terminal 10 is safe, the connection with the intracompany LAN is restored.

## Description

### TECHNICAL FIELD

The present invention relates to a network connection control program, a network connection control method, and a network connection control system to prevent the computer, where an unauthorized program such as a virus or spyware are stored, from being connected with a secure network such as an intracompany LAN.

### BACKGROUND ART

On a secure network such as an intracompany LAN, it is an important subject to prevent an invasion by an unauthorized program such as a virus or spyware from the outside of the network, and an unauthorized network connection by the computer or the like brought in from the outside. Since the mode of an unauthorized attack to such a secure network is getting more complicated and more diversified, and the method for protecting important information in the secure network should maintain a solid network by combining various systems as well.

As measures against the unauthorized program such as the virus, the unauthorized program is immediately exterminated when the unauthorized program is received by providing anti-virus software (for example, refer to non-patent document 1) in a computer terminal used in a secure network, besides a method for preventing the invasion from the outside by providing a firewall in a gateway with an external network.

In order to prevent the unauthorized connection with the secure network by the computer brought in from the outside, the monitoring system for immediately detecting the connection by the unauthorized computer terminal, for example, by providing the server for monitoring in the secure network, installing the dedicated program in an authorized computer terminal, and communicating with the server for monitoring, is provided (for example, refer to non-patent document 2). Besides, a technique to identify the authorized terminal by using address data of a computer terminal is disclosed as a technique for controlling the unauthorized computer terminal (for example, refer to patent document 1).

Non-Patent Document 1: "Virus CHASER" product information, [online], applicant's home page, [searched for on February 5, 2006], the Internet <http://www.viruschaser.jp/products/product_vc.html>
Non-Patent Document 2: Inside Information Leak Countermeasure System "Outline of CWAT System", [online], applicant's home page, [searched for on February 5, 2006], the Internet <URL:http://www.iwi.co.jp/product/cwat/cwat_system.htm1>

Patent Document 1: Japanese Patent Application Laid-open No. 2004-185498

### DISCLOSURE OF INVENTION

### PROBLEM TO BE SOLVED BY THE INVENTION

By using the above-mentioned monitoring system in the secure network, an unauthorized action performed from the inside of the network can be prevented when an unauthorized computer terminal other than an authorized computer terminal is connected with the secure network. However, in the case of using this system, although the security problem does not easily occur when the authorized computer terminal is fixed in-house or the like, the following security problems will occur when a portable laptop computer or the like is used as the authorized computer terminal.

In recent years, in particular, a portable laptop computer is often used as a business computer for making a presentation when visiting a counterparty, and working when going on a business trip. In the case of using the laptop computer outside the company, there is no problem when the laptop computer is used only in stand-alone mode without being connected with the network. However, when the laptop computer is connected with the Internet or the like in the destination, the possibility of permitting the invasion by the unauthorized program such as a virus is incontrovertible since the environment with high security like the intracompany secure network is not constructed.

Thus, when it is tried to connect the laptop computer that is invaded by the unauthorized program with the intracompany secure network in the destination, the connection is permitted and the unauthorized program is allowed to invade the secure network since the laptop computer is defined as an authorized computer terminal. In particular, when the unauthorized program operates an unauthorized action not only in the laptop computer but also in the network, the serious effect may be occurred.

The present invention is achieved to solve such a problem, and aims at providing a network connection control program, a network connection control method and a network connection control system for preventing the computer, which is invaded by the unauthorized program such as a virus or spyware in the destination or the like, from being directly connected with the secure network such as an intracompany LAN.

### MEANS FOR SOLVING PROBLEM

In order to solve such a problem, the present invention is a network connection control program for preventing a computer where an unauthorized program is stored from being connected with a secure network. The network connection control program is characterized in that the computer where a processing for connecting with a network is started executes the steps of: stopping a processing for connecting with the network executed by the network connection program stored in the computer; reading first environmental information which concerns a connection environment to the secure network, and which is stored in the computer; reading second environmental information which concerns a connection environment to the network where the computer operated previous time, and which is stored in the computer; comparing the first environmental information with the second environmental information, and determining that the environment where the computer operated previous time was the connection environment other than the secure network when the first environmental information does not match with the second environment; starting an inspection program which inspects whether or not an unauthorized program is stored in the computer, and which is read from the computer or an external storage device connected with the computer, when it is determined that the environment where the computer operated previous time was the connection environment other than the secure network; and starting the processing for connecting with the network by the network connection program when the unauthorized program is not detected in the computer by the inspection program.

The present invention may be characterized in that the computer executes the step of: executing at least one processing of processing for starting a restoring program for restoring the unauthorized program, or processing for establishing the communication with a monitor terminal connected with the secure network and sending an alert message to the monitor terminal, when the unauthorized program is detected in the computer by the inspection program.

In the present invention, the environmental information on the secure network such as the intracompany LAN is defined in the computer beforehand. When the computer is started, the environmental information on the secure network defined in the computer beforehand is compared with environmental information that was saved to the computer when the computer operated previous time. When it is determined that the computer was connected with the network other than the secure network previous time, it is inspected whether or not the unauthorized program such as a virus has invaded the computer by the inspection program such as an anti-virus software. As a result of the inspection, when it is confirmed that the virus or the like is not detected, the network connection is permitted. Accordingly, it can be guaranteed that only the computer that confirms no invasion by the virus or the like is connected with the secure network when considering the computer which was connected with the network other than the secure network previous time.

Moreover, as a result of the inspection, when the virus or the like is detected, it is possible to prevent the computer that is connected with the network other than the secure network and is invaded by the virus or the like from being directly connected with the secure network by executing the restoring processing such as the expulsion of the virus or the like and the processing for sending alert warning to the monitor terminal that monitors the secure network.

Furthermore, the present invention may be characterized in that the computer executes the steps of: connecting with the network where only a communication with the monitor terminal connected with the secure network is permitted, and determining that the network is not the secure network when it is not possible to communicate with the monitor terminal; and starting the processing for connecting with the network executed by the network connection program when it is determined that the network is not the secure network.

Thus, when the computer is started, only a communication with the monitor terminal connected with the secure network is permitted between the computer and the network. As a result, it can be determined that the connection is made with the secure network when the communication with the monitor terminal can be established, whereas the connection is made with other network when the communication with the monitor terminal cannot be established. When it is determined that the communication is made with other network, the connection can be immediately permitted without executing the virus inspection or the like since the communication is not made with the secure network.

Furthermore, the present invention may be characterized in that the computer executes the steps of: connecting with the network to collect third environmental information on a connection environment to the network, and acquiring the third environmental information; comparing the second environmental information with the third environmental information, and determining that the computer can be connected with the network when the second environmental information matches with the third environmental information; and starting the processing for connecting with the network executed by the network connection program when it is determined that the computer can be connected with the network.

Thus, when the computer is started, only a communication necessary to collect the connection environment to the network is permitted between the computer and the network. As a result, when the connected environment is the same as the environment where the computer operated previous time, it can be at least confirmed that the computer connected with the external network previous time is not connected with the intracompany secure network. When it is determined that the connection environment to the network has not changed, the connection can be immediately permitted without executing the virus inspection or the like since the computer connected with the external network previous time is not connected with the secure network. In addition, in this pattern, an operation executed when both of the connection environments to the network do not match with is not especially limited. For example, when the third connection environment is not the intracompany secure network, it may be configured so as to permit the connection at once.

Furthermore, in the step of starting the inspection program, the present invention may be characterized in that an update time or version information of the inspection program which is read from the computer or the external storage device connected with the computer is acquired, and the step of executing the processing for connecting with the network is not executed when a predetermined requirement in order to certify the update time or the version information as the latest program by the inspection program is not satisfied.

It is necessary to include the definition corresponds to the latest virus or the like for effectively operating the inspection program such as an anti-virus software used in the present invention. Whether or not the inspection program is the latest can be determined based on whether or not the update is executed within the predetermined time period, or whether or not the version is the latest, or the like. The processing for connecting with the network is not executed as long as the inspection program is not updated to the latest version in some methods.

Furthermore, a network connection control method by the network connection control program according to the present invention is a network connection control method for preventing a computer where an unauthorized program is stored from being connected with a secure network. The network connection control method is characterized by the steps of: stopping, by a computer where a processing for connecting with a network is started, the processing for connecting with the network executed by a network connection program stored in the computer; reading, by the computer, first environmental information which concerns a connection environment to the secure network, and which is stored in the computer; reading, by the computer, second environmental information which concerns a connection environment to the network when the computer operated previous time, and which is stored in the computer; comparing, by the computer, the first environmental information with the second environmental information, and determining that the environment where the computer operated previous time was the connection environment other than the secure network when the first environmental information does not match with the second environment; starting, by the computer, an inspection program which inspects whether or not an unauthorized program is stored in the computer, and which is read from the computer or the external storage device connected with the computer, when it is determined that the environment where the computer operated previous time was the connection environment other than the secure network; and starting, by the computer, the processing for connecting with the network executed by the network connection program when the unauthorized program is not detected in the computer by the inspection program.

Moreover, the network connection control method according to the present invention may be characterized by the step of: executing, by the computer, at least one processing of processing for starting a restoring program for restoring the unauthorized program, or processing for establishing the communication with a monitor terminal connected with the secure network and sending an alert message to the monitor terminal, when the unauthorized program is detected in the computer by the inspection program.

Furthermore, the network connection control method according to the present invention may be characterized by the steps of: connecting, by the computer, with the network where only a communication with the monitor terminal connected with the secure network is permitted, and determining that the network is not the secure network when it is not possible to communicate with the monitor terminal; and starting, by the computer, the processing for connecting with the network by the network connection program when it is determined that the network is not the secure network.

Furthermore, the network connection control method according to the present invention may be characterized by the steps of: connecting, by the computer, with the network to collect third environmental information on a connection environment to the network, and acquiring the third environmental information; comparing, by the computer, the second environmental information with the third environmental information, and determining that the computer can be connected with the network when the second environmental information matches with the third environmental information; and starting, by the computer, the processing for connecting with the network by the network connection program when it is determined that the computer can be connected with the network.

Furthermore, in the step of starting the inspection program, the network connection control method according to the present invention may be characterized in that an update time or version information of the inspection program which is read from the computer or the external storage device connected with the computer is acquired, and the step of executing the processing for connecting with the network by the computer is not comprised when a predetermined requirement in order to certify the update time or the version information as the latest program by the inspection program is not satisfied.

Furthermore, a network connection control system where the network connection control program according to the present invention is stored is a network connection control system for preventing a computer where an unauthorized program is stored from being connected with a secure network. The network connection control system is characterized by: network connection means for executing the processing for connecting with a network by the computer; connection processing stopping means for stopping the processing for connecting with the network executed by the network connection means when the computer is started; first environmental information storage means for storing first environmental information on the connection environment to the secure network; second environmental information storage means for storing second environmental information on a connection environment to the network where the computer operated previous time; environmental information comparing means for comparing the first environmental information with the second environmental information by reading the first environmental information from the first environmental information storage means, and by reading the second environmental information from the second environmental information storage means; connection environment determining means for determining that an environment where the computer operated previous time is connection environment other than the secure network when the first environmental information does not match with the second environment in the environmental information comparing means; and inspection program starting means for starting an inspection program which inspects whether or not the unauthorized program is stored in the computer, and which is read from the computer or an external storage device connected with the computer when it is determined that the environment where the computer operated previous time was the connection environment other than the secure network in the connection environment determining means; wherein the processing for connecting with the network by the network connection means is started when the unauthorized program is not detected in the computer by the inspection program which was started by the inspection program starting means.

Moreover, the network connection control system according to the present invention may be characterized by the execution of: at least one processing of processing for starting a restoring program for restoring the unauthorized program, or processing for establishing the communication with a monitor terminal connected with the secure network and sending an alert message to the monitor terminal, when the unauthorized program is detected in the computer by the inspection program which was started by the inspection program starting means.

Furthermore, the network connection control system according to the present invention may be characterized by: secure network determining means for connecting with the network where only a communication with the monitor terminal connected with the secure network is permitted, and determining that the network is not the secure network when it is not possible to communicate with the monitor terminal; wherein the processing for connecting with the network by the network connection means is started when it is determined that the network is not the secure network by the secure network determining means.

Furthermore, the network connection control system according to the present invention may be characterized by: environmental information acquiring means for connecting with the network to collect third environmental information on a connection environment to the network, and acquiring the third environmental information; and second connection environment determining means for comparing the second environmental information with the third environmental information, and determining that the computer can be connected with the network when the second environmental information matches with the third environmental information; wherein the processing for connecting with the network by the network connection means is started when it is determined that the computer can be connected with the network by the second connection environment determining means.

Furthermore, in the inspection program starting means, the network connection control system according to the present invention may be characterized in that an update time or version information of the inspection program which is read from the computer or the external storage device connected with the computer is acquired, and the processing for connecting with the network by the network connection means is not executed when a predetermined requirement in order to certify the update time or the version information as the latest program by the inspection program is not satisfied.

### EFFECT OF THE INVENTION

According to the present invention, it can be achieved to prevent the computer that is connected with the network and invaded by an unauthorized program such as a virus or spyware when the computer is brought out from being directly connected with the secure network such as the intracompany LAN. As a result, only the computer where the inspection for the virus or the like is executed can be connected, and it becomes possible to ensure the security of the secure network such as the intracompany LAN.

### BEST MODES FOR CARRYING OUT THE INVENTION

Hereinafter, the best mode for carrying out the present invention will be explained in detail using the drawings. Note herein that specific processing procedures such as a method for stopping a network connection, a method for restoring a network connection and a method for communicating with a monitor terminal described below are merely examples of embodiments for the present invention. Therefore, the present invention is not limited to the following examples of the embodiments.

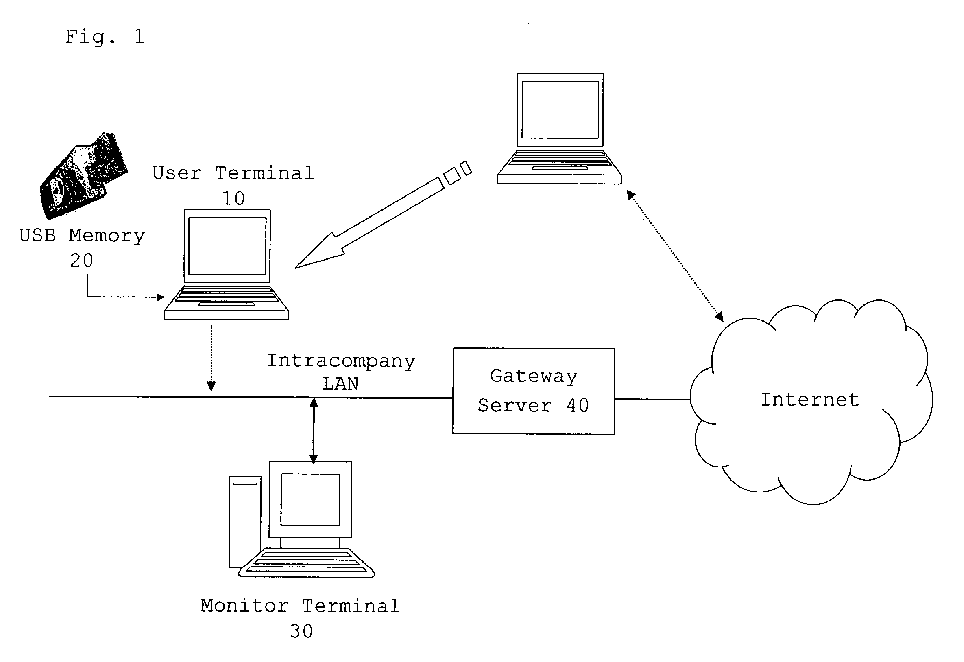

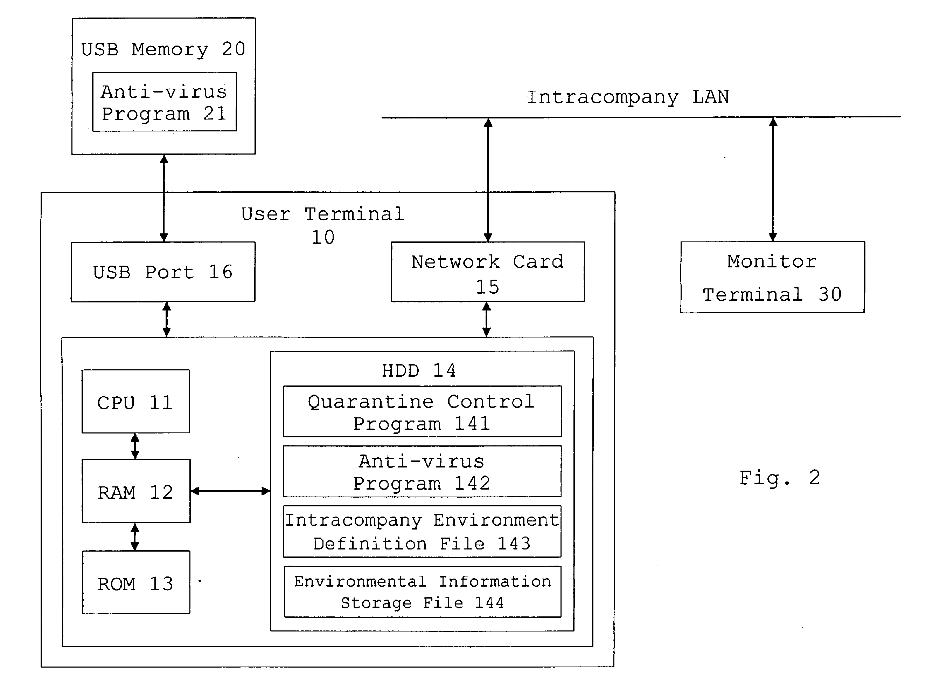

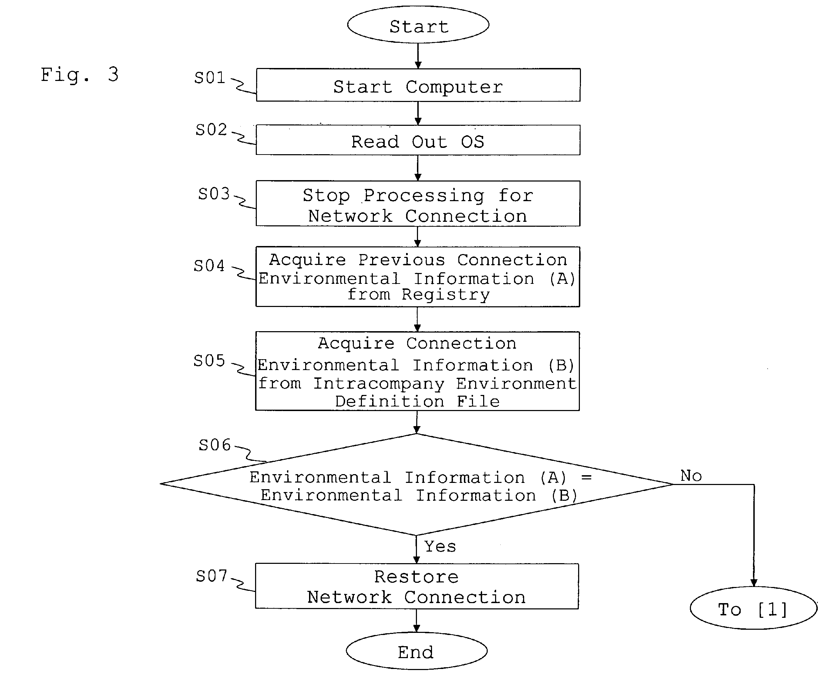

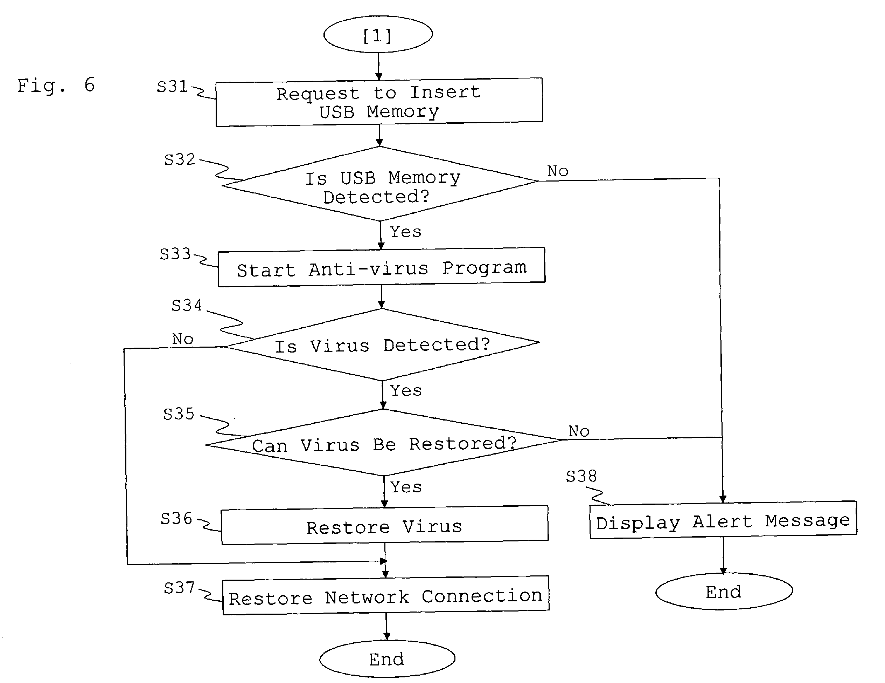

Fig. 1 is a figure showing an outline of an embodiment of a network connection control program according to the present invention. Fig. 2 is a block diagram showing a configuration of a computer where the network connection control program according to the present invention is stored. Fig. 3 through Fig. 5 are flow charts showing flows of first through third methods for determining a connection environment to a network in the network connection control program according to the present invention. Fig. 6 is a flow chart showing a flow for determining whether or not the network connection can be permitted in the network connection control program according to the present invention.

The network connection control program according to the present invention is used in the mode shown in an example of Fig. 1. The network connection control program according to the present invention is stored in a user terminal 10 that is a portable computer such as a laptop computer, and is permitted to connect with an intracompany LAN that is a secure network. The user terminal 10 is usually used by being connected with the intracompany LAN.

The portable user terminal 10 may be connected with an open network such as the Internet when the portable user terminal 10 is brought out of the company since the portable user terminal 10 can be used for making a presentation when visiting a counterparty, or working when going on a business trip. When the portable user terminal 10 is connected with the network outside the company, the risk of permitting the invasion by an unauthorized program such as a virus or spyware increases compared to the intracompany LAN where the environment with high security is constructed.

When the user terminal 10 used outside the company is brought back in the company, since the user terminal 10 itself have been defined as an authorized terminal in the intracompany LAN, the connection with the intracompany LAN shall be permitted. However, when the user terminal 10 is infected with a virus or the like, and in particular, when the virus that the user terminal 10 is infected operates on the network and occurs an unauthorized influence, the security of the network will be violated from the inside, even if a gateway server 30 prevents the unauthorized program from an external network from invading.

Then, when the user terminal 10 is started, the network connection control program according to the present invention temporarily stops a connecting operation to the intracompany LAN, and executes the processing for connecting with the intracompany LAN after it is confirmed that the user terminal 10 is not infected, by the inspection for the virus or the like. However, it is inefficient to execute the virus inspection or the like every time for the computer that is not take out of the company, and the decrease in convenience can be caused. Therefore, it may be configured so as to execute the inspection for the virus or the like only when it is confirmed that the previous connection environment was the network other than the intracompany LAN by confirming the previous connection environment when the network connection is executed. Thus, it becomes possible to guarantee the security of the intracompany LAN by executing the quarantine work without fail on the computer that will be connected with the intracompany LAN.

In the case of considering the aim to guarantee the security of the intracompany LAN, it is not an indispensable requirement to inspect the virus regardless of the previous connection environment when the user terminal 10 tries to be connected with the network outside the company. Therefore, for example, the network connection control program may be configured so as to permit the network connection without executing the inspection for the virus or the like when it is determined that the user terminal 10 is not connected with the intracompany LAN, by being configured so only the communication through the intracompany LAN can be executed between the user terminal 10 and the monitor terminal 30, which monitors the intracompany LAN, while the network connection has been stopped, and which is before the inspection for the virus or the like, by trying to communicate with the monitor terminal 30 when the user terminal 10 is started, and by determining whether or not the user terminal 10 is connected with the intracompany LAN.

Moreover, in the case of considering the aim to guarantee the security of the intracompany LAN, it is not an indispensable requirement to inspect the virus or the like when the user terminal 10 is continuously used by being connected with the network outside the company even when the previous connection environment is the network outside the company. Therefore, for example, the network connection control program may be configured so as to permit the network connection without executing the inspection for the virus or the like when it is confirmed that the previous connection environment has not changed, by being configured so only the communication necessary to collect the information on the connection environment to the network can be executed while the network connection has been stopped, and which is before the inspection for the virus or the like, and by collecting the environmental information on the connected network when the user terminal 10 is started.

In either of the above-mentioned pattern, an anti-virus software that resides in the user terminal 10 may be used for the inspection for the virus or the like. However, since it is necessary to connect with the network in order to keep the anti-virus software that resides in the computer up-to-date, it is preferable to use the external storage device where the anti-virus program with the latest definition is stored. It is preferable to use a USB memory 20 that make the anti-virus software start automatically although the kind of the external storage device is not especially limited.

In Fig. 2, a CPU 11, a RAM 12, a ROM 13, a HDD 14, a network card 15, and a USB port 16 are included in the user terminal 10 such as a laptop computer, where the network connection control program according to the present invention is stored. A USB memory 20 where an anti virus program 21 is stored can be connected with the USB port 16. A quarantine control program 141, an intracompany environment definition file 143, and an environmental information storage file 144 are stored in the HDD 14, and an anti virus program 142 may be stored in the HDD 14 in the embodiment that does not use the USB memory 20.

In order to execute the predetermined processing by an application program such as the quarantine control program 141 stored in the HDD 14, basic and various programs for the hardware control such as the input control and the output control stored in the ROM 13 are started, and an operation processing is executed by the CPU 11, operating the RAM 12 as a work area of the application program.

When the user terminal 10 is started, the operation system is read, the network card 15 is initialized by a network driver in usual processing, and the connection with the intracompany LAN is performed. However, in the present invention, the processing for connecting with the network is stopped by the operation of the network driver or the quarantine control program 141. In addition, the processing for stopping the network connection may be executed at a hardware level by providing a program that executes the processing for stopping the network connection on a BIOS or the like in the network card 15, besides the processing for stopping the network connection at a driver level.

When the processing for connecting with the network is stopped, the connection environment to the network where the user terminal 10 operated previous time is confirmed. The information on the connection environment to the intracompany LAN that the user terminal 10 is permitted to connect is stored as the intracompany environment definition file 143 in the HDD 14. On the other hand, the information on the connection environment to the network where the user terminal 10 operated previous time is stored as the environmental information storage file 144 in the registry of the operation system or the HDD 14.

The connection environment to the network executed by the quarantine control program 141 is confirmed as follows. The information on the connection environment to the network where the user terminal 10 operated previous time is read from the registry value or the environmental information storage file 144, the information on the connection environment to the intracompany LAN is read from the intracompany environment definition file 143, and it is determined whether or not the connection environment where the user terminal 10 operated previous time was the intracompany LAN by comparing both of the information on the connection environment. When both of the information on the connection environment matches, it is determined that the connection environment where the computer operated previous time was the intracompany LAN.

If the connection environment where the computer operated previous time is the intracompany LAN, the processing for restoring the network connection is executed since it is confirmed that it was used in the environment with high security. The method for the processing for restoring the network connection is not especially limited. For example, it is pseudoly transmitted that the network card is newly added to the operation system, and usual processing for initializing may be executed to the network card 15 by a function of Plug and Play. Moreover, the transmission of the information to the network card 15 is inhabited by using a filter driver, and the network connection may be executed by releasing the inhibition.

In addition, the method for determining whether or not the network connection can be permitted is not limited to the above-mentioned method. When it can be confirmed that the user terminal 10 is trying to be connected with the network outside the company, the network connection may be directly permitted regardless of the previous connection environment. In this case, the network connection control program may be configured so as to permit the network connection when it is determined that the user terminal 10 is not connected with the intracompany LAN, by being configured so only the communication through the intracompany LAN can be executed between the user terminal 10 and the monitor terminal 30, which monitors the intracompany LAN, by the quarantine control program 141 while the network connection has been stopped, by trying to communicate with the monitor terminal 30 when the user terminal 10 is started, and by determining whether or not the user terminal 10 is connected with the intracompany LAN.

Moreover, when it can be confirmed that the user terminal 10 is in the connection environment where the user terminal 10 operated previous time, the network connection may be directly permitted since it becomes clear that the user terminal 10 that has been connected with the external network is not connected with the intracompany LAN. In this case, the network connection control program may be configured so as to permit the network connection when it is determined that the environment is the same as the information on the connection environment to the network, where the user terminal 10 operated previous time and which is read from the registry value or the environmental information storage file 144, by being configured so only the communication necessary to collect the information on the connection environment to the network can be executed by the quarantine control program while the network connection has been stopped, and by collecting the environmental information on the connected network when the user terminal 10 is started.

In either of the above-mentioned case, when it is determined that a requirement that the network connection can be immediately permitted is not satisfied, the inspection is executed by the anti-virus software or the like in order to inspect whether or not the unauthorized program such as a virus or spyware have invaded the user terminal 10.

For example, the screen that requires the USB memory 20, in which the anti-virus program 21 kept up-to-date is stored, is displayed by the operation of the quarantine control program 141, and the user inserts the USB memory 20 into the USB port 16. Then, the anti-virus program 21 is automatically started by the operation of the USB memory 20, and the virus check is run on the user terminal 10.

The storage medium where the anti-virus program 21 is stored is not limited to the USB memory 20, and the flexible disk, CD-ROM, or the like may be used. However, when it is not possible to operate the automatic start like the USB memory, it is necessary to request the operation such as clicking the execution file to the user itself.

The inspection for the virus or the like can be executed by reading the anti-virus program 142 stored in HDD 14. However, since it is necessary to connect with the network and access a server for the update in order to keep the anti-virus program 142 up-to-date, it is necessary to apply a device to execute the inspection that reflects the latest definition. That can be achieved, for example, by determining that the definition is the latest when the elapsed time period from the previous update time recorded in the anti-virus program 142 is within the predetermined time period, or by determining whether or not the version information recorded in the anti-virus program 142 is the latest. When the anti-virus program 142 is not kept up-to-date, the processing for restoring the network connection is not executed, or the update is executed by permitting only a communication with the server for the update in order to reflect the latest definition on the anti-virus program 142. The update of the anti-virus program 142 may be executed not by connecting through the network but by connecting with the external storage device such as a flexible disk.

When the virus or the like is not detected as a result of the inspection executed in the user terminal 10 by reading the anti-virus program 21 or 142, the processing for restoring the network connection is immediately started by the quarantine control program 141. Although the method for restoring the network connection is the same as the one explained above, the inspection for the virus or the like can be completed by directly detecting the virus or the like by the quarantine control program 141, or by writing the time or the like, when the inspection for the virus or the like is completed, in the registry by the anti-virus program 21 or 142 and then detecting the completion of the inspection for the virus or the like by consistently monitoring the registry by the quarantine control program 141. The alert warning may be transmitted to the monitor terminal 30 by the operation of the quarantine control program 141 when the network connection is restored.

On the other hand, when the virus or the like is detected as a result of the inspection by the anti-virus program 21 or 142, the restoration of the detected virus or the like is immediately executed. However, when it is determined that the detected virus or the like can not be restored, the processing for restoring the network connection is not executed in order to ensure the security of the intracompany LAN.

When the restoration of the virus or the like is executed, the processing for restoring the network to the intracompany LAN is executed. Although the method for restoring the network connection is the same as the one explained above, the restoration of the virus or the like can be completed by directly detecting the virus or the like by the quarantine control program 141, or by writing the time and the like, when the virus is restored, in the registry by the anti-virus program 21 or 142 and then detecting the restoration of the virus or the like by consistently monitoring the registry by the quarantine control program 141. It is preferable to transmit the alert warning to the monitor terminal 30 in order to inform the detection of the virus, the kind of the detected virus, and the like by the operation of the quarantine control program 141 when the virus or the like is restored, and the network connection is restored.

The flow of a first embodiment for determining a connection environment to the network in the network connection control program according to the present invention will be explained by using the flow chart of Fig. 3. In the following flow, the area or the like where the connection environmental information is stored is not especially limited. Whether the specific processing for stopping or restoring the network connection is executed at the driver level or the hardware level is not especially limited, as well.

When a computer is started (S01), an operation system is read (S02). However, the processing for immediately stopping an operation for the network connection is executed among operations by the operation system (S03). Continuously, environmental information (A) that is information on the connection environment to the network when the computer operated previous time is acquired from a registry of the operation system (S04). Furthermore, environmental information (B) that is information on the usual connection environment to an intracompany LAN or the like is acquired from a file that defines the network environment inside the company (S05).

Then, it is compared whether or not the environmental information (A) and the environmental information (B) matches (S06). When both of the environmental information matches, it is determined that the computer is continuously used under the environment where the computer is connected with the intracompany LAN, and the processing for restoring the network connection is executed (S07). Then, the processing related to the network connection control is completed. When both of the environmental information does not match, it is shifted to a processing for determining whether or not the network connection can be permitted based on the inspection for the virus or the like.

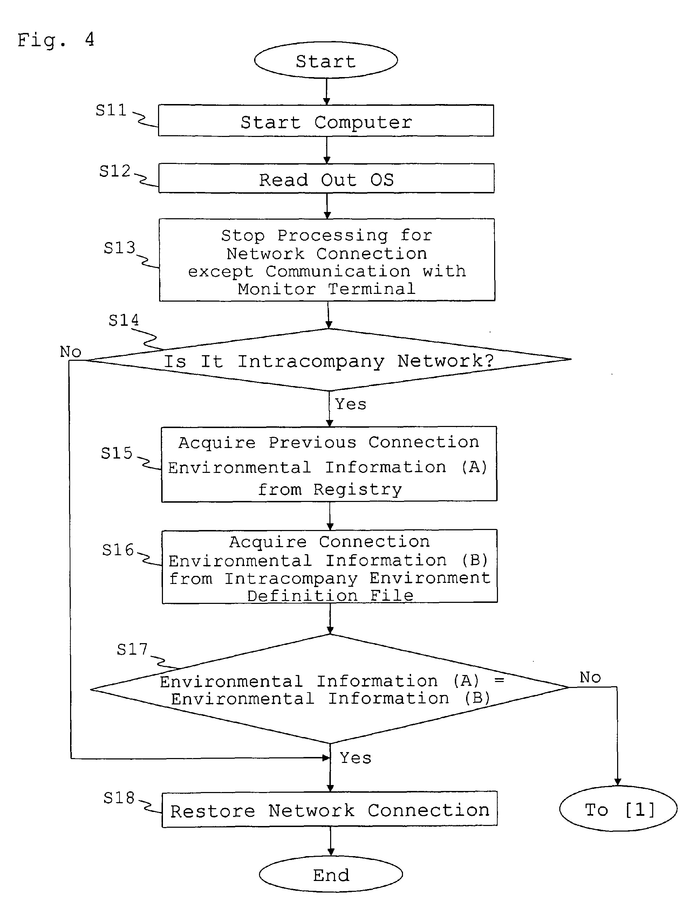

The flow of a second embodiment for determining a connection environment to the network in the network connection control program according to the present invention will be explained by using the flow chart of Fig. 4. In the following flow, it can be also said that the area or the like where the connection environmental information is stored nor the specific processing for stopping or restoring the network connection are not especially limited.

When the computer is started (S11), the operation system is read (S12). However, the processing for immediately stopping an operation for the network connection except a communication with a monitor terminal is executed among operations by the operation system (S13). The connection with the monitor terminal is tried through the intracompany network, and then it is determined whether or not the connection environment of the computer is the intracompany network based on whether or not the connection is permitted (S14).

When the communication with the monitor terminal cannot be executed, and it is determined that the connection environment of the computer is not the intracompany network, the processing for restoring the network connection is directly executed since it is not necessary to execute the quarantine for a network connection outside the company (S18), and then the processing related to the network connection control is completed. On the other hand, when it is determined that the connection environment of the computer is the intracompany network, environmental information (A) that is information on the connection environment to the network where the computer operated previous time is acquired from the registry of the operation system (S15). Furthermore, environmental information (B) that is information on the usual connection environment to an intracompany LAN or the like is acquired from a file that defines the network environment inside the company (S16).

Continuously, it is compared whether or not the environmental information (A) and the environmental information (B) match (S17). When both of the environmental information match, it is determined that the computer is continuously used under the environment where the computer is connected with the intracompany LAN, and the processing for restoring the network connection is executed (S18). Then, the processing related to the network connection control is completed. When both of the environmental information does not match, it is shifted to processing for determining whether or not the network connection can be permitted based on the inspection for the virus or the like.

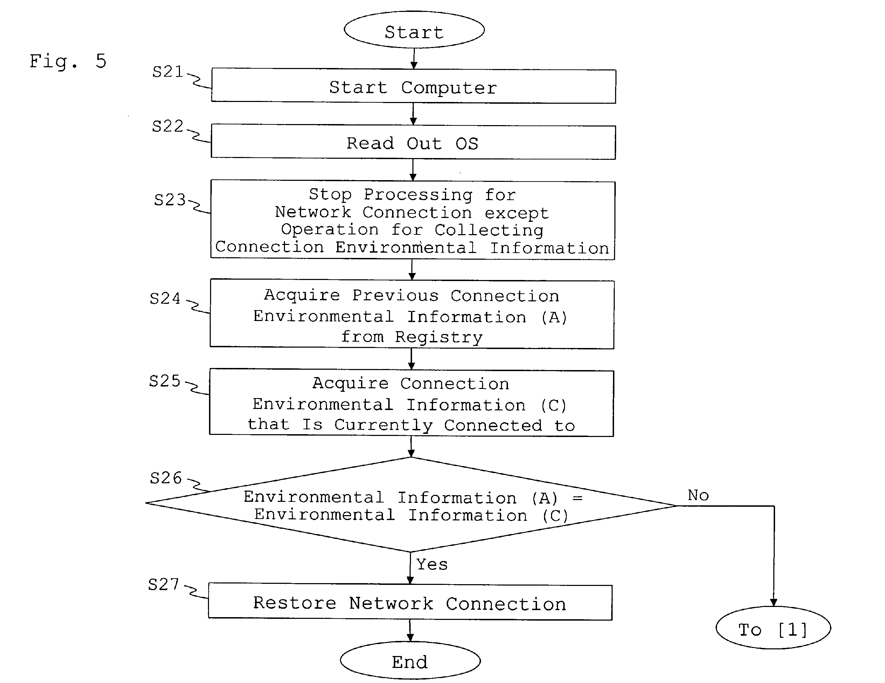

The flow of a third embodiment for determining a connection environment to the network in the network connection control program according to the present invention will be explained by using the flow chart of Fig. 5. In the following flow, it can be also said that the area or the like where the connection environmental information is stored nor the specific processing for stopping or restoring the network connection are not especially limited.

When the computer is started (S21), the operation system is read (S22). However, the processing for immediately stopping an operation for the network connection except an operation for collecting connection environmental information to the network is executed among operations by the operation system (S23). Continuously, the environmental information (A) that is information on the connection environment to the network where the computer operated previous time is acquired from a registry of the operation system (S24). Furthermore, environmental information (C) that is information on the connection environment collected from the currently connected network is acquired (S25).

Then, it is compared whether or not the environmental information (A) and the environmental information (C) match (S26). When both of the environmental information matches, it is determined that the computer is continuously used under the same environment as the computer operated previous time, and the processing for restoring the network connection is executed (S27). Then, the processing related to the network connection control is completed. When both of the environmental information does not match, it is determined that there is a possibility that the computer is brought in from outside the company since the environment where the computer operated previous time has changed. Therefore, it is shifted to processing for determining whether or not the communication with the network can be permitted based on the inspection for the virus or the like. The operation performed when both of the environmental information does not match is not limited to the above example. For example, when it is determined that the connected environment is not the intracompany LAN by comparing the environmental information B and the environmental information C, the processing for restoring the network connection may be executed.

The determination flow, which shows the case where it is needed to determine whether or not the network connection can be permitted in the first embodiment through the third embodiment, by the network connection control program according to the present invention will be explained by using the flow chart of Fig. 6. In the following flow, although anti-virus software is assumed to be detected from a USB memory, a medium where the anti-virus software is stored is not limited to the USB memory, and the anti-virus software stored in other external storage medium or the computer itself may be used. Moreover, the target of the inspection may be not only the virus but also other unauthorized programs such as spyware.

When it is determined that it is necessary to confirm whether or not the virus or the like exists inside the computer due to the disagreement of the connection environmental information, the dedicated USB memory is requested to be inserted in order to start the anti-virus software which is kept up-to-date (S31). When the USB memory is not detected (S32), an alert message is displayed since the inspection for the virus cannot be executed (S38), and the processing for restoring the network connection is not executed.

When the USB memory is detected (S32), the anti-virus software read from the USB memory is started (S33), and the inspection for the virus is executed. When the virus or the like is not detected by the inspection (S34), the processing for restoring the network connection is executed (S37), and the processing related to the network connection control is completed.

When the virus or the like is detected by the inspection (S34), the detected virus is restored (S36) when the virus can be restored (S35). Then, the processing for restoring the network connection is executed (S37), and the processing related to the network connection control is completed. On the other hand, when the detected virus cannot be restored (S35), an alert message is displayed since the virus cannot be restored (S38), and the processing for restoring the network connection is not executed.

### BRIEF DESCRIPTION OF DRAWINGS

Fig. 1 is a figure showing an outline of embodiments of a network connection control program according to the present invention.
Fig. 2 is a block diagram showing a configuration of a computer where the network connection control program according to the present invention is stored.
Fig. 3 is a flow chart showing a flow of a first method for determining a connection environment to the network in the network connection control program according to the present invention.
Fig. 4 is a flow chart showing a flow of a second method for determining a connection environment to the network in the network connection control program according to the present invention.
Fig. 5 is a flow chart showing a flow of a third method for determining a connection environment to the network in the network connection control program according to the present invention.
Fig. 6 is a flow chart showing a flow for determining whether or not the network connection can be permitted in the network connection control program according to the present invention.

### EXPLANATIONS OF NUMERALS

- 10: User terminal
- 11: CPU
- 12: RAM
- 13: ROM
- 14: HDD
- 141: Quarantine control program
- 142: Anti-virus program
- 143: Intracompany environment definition file
- 144: Environmental information storage file
- 15: Network card
- 16: USB port
- 20: USB memory
- 21: Anti-virus program
- 30: Monitor terminal
- 40: Gateway server

## Claims

1. A network connection control program for preventing a computer where an unauthorized program is stored from being connected with a secure network, the network connection control program to make the computer in which a processing for connecting with a network is started execute the steps of, and the network connection control program comprising the steps of:
stopping a processing for connecting with the network executed by the network connection program stored in the computer;
reading first environmental information which concerns a connection environment to the secure network, and which is stored in the computer;
reading second environmental information which concerns a connection environment to the network where the computer operated previous time, and which is stored in the computer;
comparing the first environmental information with the second environmental information, and determining that the environment where the computer operated previous time was the connection environment other than the secure network when the first environmental information does not match with the second environment;
starting an inspection program which inspects whether or not an unauthorized program is stored in the computer, and which is read from the computer or an external storage device connected with the computer when it is determined that the environment where the computer operated previous time was the connection environment other than the secure network; and
starting the processing for connecting with the network executed by the network connection program when the unauthorized program is not detected in the computer by the inspection program.

2. The network connection control program according to claim 1 to make the computer execute the step of, and the network connection control program according to claim 1 further comprising the step of:
executing at least one processing of processing for starting a restoring program for restoring the unauthorized program, or processing for establishing the communication with a monitor terminal connected with the secure network and sending an alert message to the monitor terminal, when the unauthorized program is detected in the computer by the inspection program.

3. The network connection control program according to claim 1 or 2 to make the computer execute the steps of, and the network connection control program according to claim 1 or 2 further comprising the steps of:
connecting with the network where only a communication with the monitor terminal connected with the secure network is permitted, and determining that the network is not the secure network when it is not possible to communicate with the monitor terminal; and
starting the processing for connecting with the network executed by the network connection program when it is determined that the network is not the secure network.

4. The network connection control program according to claim 1 or 2 to make the computer execute the steps of, and the network connection control program according to claim 1 or 2 further comprising the steps of:
connecting with the network to collect third environmental information on a connection environment to the network, and acquiring the third environmental information;
comparing the second environmental information with the third environmental information, and determining that the computer can be connected with the network when the second environmental information matches with the third environmental information; and
starting the processing for connecting with the network executed by the network connection program when it is determined that the computer can be connected with the network.

5. The network connection control program according to any one of claims 1 to 4, wherein, in the step of starting the inspection program
an update time or version information of the inspection program which is read from the computer or the external storage device connected with the computer is acquired, and the step of executing the processing for connecting with the network is not executed when a predetermined requirement in order to certify the update time or the version information as the latest program by the inspection program is not satisfied.

6. A network connection control method for preventing a computer where an unauthorized program is stored from being connected with a secure network, and the network connection control method comprising the steps of:
stopping, by a computer where a processing for connecting with a network is started, the processing for connecting with the network executed by a network connection program stored in the computer;
reading, by the computer, first environmental information concerning a connection environment to the secure network, the first environmental information stored in the computer;
reading, by the computer, second environmental information which concerns a connection environment to the network where the computer operated previous time, and which is stored in the computer;
comparing, by the computer, the first environmental information with the second environmental information, and determining that the environment where the computer operated previous time was the connection environment other than the secure network when the first environmental information does not match with the second environment;
starting, by the computer, an inspection program which inspects whether or not an unauthorized program is stored in the computer, and which is read from the computer or the external storage device connected with the computer when it is determined that the environment where the computer operated previous time was the connection environment other than the secure network; and
starting, by the computer, the processing for connecting with the network executed by the network connection program when the unauthorized program is not detected in the computer by the inspection program.

7. The network connection control method according to claim 6 further comprising the step of:
executing, by the computer, at least one processing of processing for starting a restoring program for restoring the unauthorized program, or processing for establishing the communication with a monitor terminal connected with the secure network and sending an alert message to the monitor terminal, when the unauthorized program is detected in the computer by the inspection program.

8. The network connection control method according to claim 6 or 7 further comprising the steps of:
connecting, by the computer, with the network where only a communication with the monitor terminal connected with the secure network is permitted, and determining that the network is not the secure network when it is not possible to communicate with the monitor terminal; and
starting, by the computer, the processing for connecting with the network executed by the network connection program when it is determined that the network is not the secure network.

9. The network connection control method according to claim 6 or 7 further comprising the steps of:
connecting, by the computer, with the network to collect third environmental information on a connection environment to the network, and acquiring the third environmental information;
comparing, by the computer, the second environmental information with the third environmental information, and determining that the computer can be connected with the network when the second environmental information matches with the third environmental information; and
starting, by the computer, the processing for connecting with the network executed by the network connection program when it is determined that the computer can be connected with the network.

10. The network connection control method according to any one of claims 6 to 9, wherein, in the step of starting the inspection program
an update time or version information of the inspection program which is read from the computer or the external storage device connected with the computer is acquired, and the step of executing the processing for connecting with the network by the computer is not comprised when a predetermined requirement in order to certify the update time or the version information as the latest program by the inspection program is not satisfied.

11. A network connection control system for preventing a computer where an unauthorized program is stored from being connected with a secure network, and the network connection control system comprising:
network connection means for executing a processing for connecting with a network of the computer;
connection processing stopping means for stopping the processing for connecting with the network executed by the network connection means when the computer is started;
first environmental information storage means for storing first environmental information on the connection environment to the secure network;
second environmental information storage means for storing second environmental information on a connection environment to the network where the computer operated previous time;
environmental information comparing means for comparing the first environmental information with the second environmental information by reading the first environmental information from the first environmental information storage means, and by reading the second environmental information from the second environmental information storage means;
connection environment determining means for determining that an environment where the computer operated previous time is connection environment other than the secure network when the first environmental information does not match with the second environment in the environmental information comparing means; and
inspection program starting means for starting an inspection program which inspects whether or not the unauthorized program is stored in the computer, and which is read from the computer or the external storage device connected with the computer when it is determined that the environment where the computer operated previous time was the connection environment other than the secure network in the connection environment determining means; wherein
the processing for connecting with the network by the network connection means is started when the unauthorized program is not detected in the computer by the inspection program which was started by the inspection program starting means.

12. The network connection control system according to claim 11, wherein
at least one processing of processing for starting a restoring program for restoring the unauthorized program, or processing for establishing the communication with a monitor terminal connected with the secure network and sending an alert message to the monitor terminal is executed, when the unauthorized program is detected in the computer by the inspection program which was started by the inspection program starting means.

13. The network connection control system according to claim 11 or 12 further comprising:
secure network determining means for connecting with the network where only a communication with the monitor terminal connected with the secure network is possible, and determining that the network is not the secure network when it is not possible to communicate with the monitor terminal; wherein
the processing for connecting with the network executed by the network connection means is started when it is determined that the network is not the secure network by the secure network determining means.

14. The network connection control program according to claim 11 or 12 further comprising:
environmental information acquiring means for connecting with the network to collect third environmental information on a connection environment to the network, and acquiring the third environmental information; and
second connection environment determining means for comparing the second environmental information with the third environmental information, and determining that the computer can be connected with the network when the second environmental information matches with the third environmental information; wherein
the processing for connecting with the network executed by the network connection means is started when it is determined that the computer can be connected with the network by the second connection environment determining means.

15. The network connection control system according to any one of claims 11 to 14, wherein, in the inspection program starting means
an update time or version information of the inspection program which is read from the computer or the external storage device connected with the computer is acquired, and the processing for connecting with the network executed by the network connection means is not executed when a predetermined requirement in order to certify the update time or the version information as the latest program by the inspection program is not satisfied.
